# FASCICULE DE BREVET EUROPEEN

(11) **EP 4 392 278 B1**
(45) Date de publication et mention de la délivrance du brevet: **03.12.2025**
(21) Numéro de dépôt: 22755265.0
(22) Date de dépôt: 25.07.2022
(51) Int. Cl.: B60K 1/04

(54) **ENSEMBLE DE PROTECTION D'UN BLOC DE BATTERIES DE COFFRE**
SCHUTZANORDNUNG FÜR EIN KOFFERRAUMBATTERIEPACK
PROTECTION ASSEMBLY FOR A TRUNK BATTERY PACK

(30) Priorité: 27.08.2021 FR 2108985
(43) Date de publication de la demande: 03.07.2024
(73) Titulaire: Stellantis Auto SAS, 78300 Poissy (FR)
(72) Inventeur: TROPEE, Nicolas, 90000 BELFORT (FR); PERU, Marc, 92290 CHATENAY MALABRY (FR); MERESSE, Ludovic, 25750 ARCEY (FR); VACCA, Bernard, 70400 HERICOURT (FR); JEAMBRUN, David, 25260 LOUGRES (FR)
(74) Mandataire: BCIP
(86) Numéro de dépôt international: PCT/FR2022/051491
(87) Numéro de publication internationale: WO 2023/026001

(56) Documents cités:
- WO-A1-2010/136689
- US-A1- 2012 175 177
- US-A1- 2020 028 136

## Description

La présente invention revendique la priorité de la demande française 2108985 déposée le 27 aout 2021**.**

Le domaine technique concerne les ensembles de protection de blocs de batteries, les structures de coffre équipées de tels ensembles de protection et les véhicules présentant de telles structures de coffre.

Les véhicules à motorisations électriques connaissent un intérêt croissant de la part des clients, tandis que leurs autonomies sont sans cesse améliorées par les constructeurs d'automobiles. Pour ce faire, les acteurs industriels impliqués ont beaucoup investi dans le développement de nouvelles technologies pour proposer des batteries toujours plus performantes, c'est-à-dire des batteries offrant des vitesses de charges accrues, des capacités en constante augmentation et des densités énergétiques élevées.

En parallèle de l'amélioration des technologies, les constructeurs d'automobiles mettent également l'accent sur l'augmentation du volume dédié aux batteries dans leurs véhicules à motorisations électriques. Cependant, les batteries actuelles souffrent d'inconvénients inhérents aux technologies utilisées et notamment à leur instabilité en cas de choc : une cellule de batterie endommagée à la suite d'un choc peut en effet subir un emballement et provoquer un départ de feu.

Aussi, en raison des risques de feu, certaines zones d'un véhicule sont considérées comme des zones d'exclusion dans lesquelles l'implantation de batteries est exclue en raison de la forte probabilité de subir une déformation en cas de choc. Ainsi, l'espace proche du panneau arrière est considéré comme une zone d'exclusion en raison du phénomène de déformation provoquant la pénétration du panneau arrière dans le coffre du véhicule, en cas de choc arrière. Cette pénétration du panneau arrière provoque en effet une déformation du longeron et des éléments environnants. Une batterie disposée dans cet espace risquerait donc d'être violemment impactée par le panneau arrière, le longeron ou tout autre élément de carrosserie et d'être ainsi dangereusement détériorée. Par choc arrière, il convient de comprendre qu'il s'agit d'un choc simulé sur le véhicule à l'aide d'un chariot percutant le véhicule par l'arrière dans des conditions de vitesses et de directions standardisées, faisant partie des conditions d'homologation à respecter.

Le document WO2010/136689 décrit une structure de coffre d'un véhicule comprenant deux longerons, un panneau arrière et une traverse de fixation s'étendant entre deux extrémités fixées aux longerons et protégeant un module d'alimentation d'un moteur électrique.

Les constructeurs d'automobiles cherchent à réduire les zones d'exclusion. Ainsi, il existe un besoin d'une solution pour permettre l'utilisation d'une partie de l'espace situé à proximité du panneau arrière d'un véhicule.

La présente invention a pour objet de pallier les problèmes exposés précédemment.

A cet effet, la présente invention se rapporte à une structure de coffre comprenant deux longerons et un panneau arrière fixé aux extrémités des longerons, et étant équipé d'un ensemble de protection d'un bloc de batteries, l'ensemble comprenant une traverse de fixation s'étendant entre deux extrémités, chacune des extrémités étant fixée à un longeron du véhicule, à distance d'un panneau arrière de la structure, la traverse étant conformée pour permettre la fixation d'au moins un bloc de batteries à la traverse, de sorte que la traverse soit disposée entre le bloc de batteries et le panneau arrière, l'ensemble comprenant en outre au moins un élément de renfort conçu pour s'étendre le long d'un longeron, entre une extrémité de la traverse fixée audit longeron et le panneau arrière, l'élément de renfort étant conçu pour rigidifier la partie du longeron entre ladite extrémité de la traverse et le panneau arrière, de sorte à limiter les déformations du longeron en cas de choc arrière subi par la structure de coffre équipée de l'ensemble. L'invention concerne enfin un véhicule présentant une structure de coffre selon l'invention.

Ainsi, un ensemble selon l'invention permet d'obtenir une structure de coffre selon l'invention et notamment de fixer un bloc de batteries à la traverse de fixation, la traverse étant quant à elle fixée aux deux longerons du véhicule. Afin d'empêcher ou de limiter l'avancée du panneau arrière dans le coffre et ainsi d'éviter que le panneau ne percute la traverse de fixation, l'élément de renfort permet de renforcer la portion de longeron située entre l'extrémité de la traverse fixée au longeron et le panneau arrière. Ainsi rigidifié entre la traverse et le panneau, le longeron est moins enclin à se vriller ce qui permet de limiter l'avancée du panneau arrière vers la traverse. En limitant ou en empêchant le rapprochement du panneau arrière de la traverse de fixation, les risques d'impacter le bloc de batteries sont réduits. Il est alors possible, de réduire la zone d'exclusion située à proximité du panneau arrière et donc d'augmenter le volume dédié au bloc de batteries.

Selon un mode de réalisation de l'invention, l'ensemble comprend deux éléments de renforts destinés à être fixés à chacune des extrémités de la traverse.

Selon une possibilité, au moins un élément de renfort forme une équerre destinée à renforcer l'angle formé entre le panneau arrière et le longeron le long duquel l'élément de renfort s'étend.

Selon un mode de réalisation, au moins un élément de renfort est conformé pour s'étendre sur au moins deux faces du longeron.

Selon une possibilité de la structure de coffre, un bloc de batteries est fixé à la traverse de fixation, la traverse étant disposée entre le bloc de batteries et le panneau arrière.

L'invention sera mieux comprise à la lecture de la description détaillée qui va suivre, donnée uniquement à titre d'exemple non limitatif et faite en se référant au dessin annexé sur lequel :

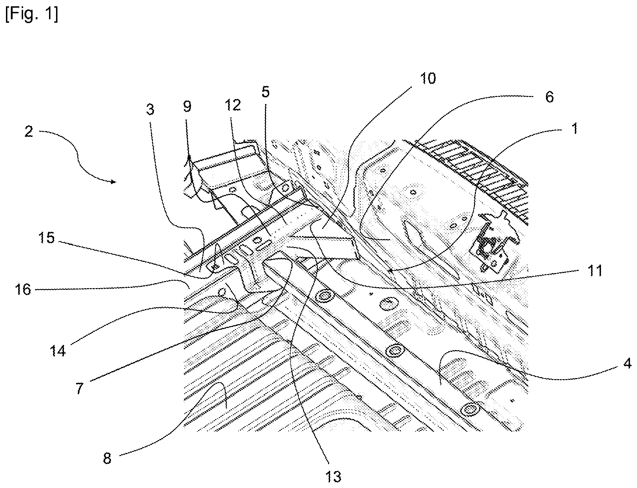

[Fig. 1] la figure 1 représente une vue en perspective partielle d'une structure de coffre selon l'invention équipée d'un ensemble de protection selon l'invention.

Un ensemble 1 de protection selon l'invention, visible en partie sur la figure 1, permet d'assembler une structure 2 de coffre selon l'invention, illustrée en partie sur la figure, d'un véhicule selon l'invention.

La structure 2 de coffre comprend deux longerons 3, dont un seul est visible sur la figure, et un panneau 6 arrière fixé aux extrémités des longerons 5. Le panneau arrière 6 supporte un ouvrant de coffre, non illustré sur la figure.

L'ensemble 1 comprend une traverse 4 de fixation s'étendant entre deux extrémités 7, chacune des extrémités 7 étant destinée à être fixée à un des deux longerons 3 de la structure de coffre du véhicule, à distance du panneau 6 arrière de la structure 2. La traverse 4 est conformée pour permettre la fixation d'au moins un bloc de batteries, non illustré, à la traverse 4, de sorte que la traverse 4 soit disposée entre le bloc de batteries et le panneau 6 arrière. Le bloc de batteries est, par exemple, disposée sous un plancher 8 de la structure 2 de coffre, et fixée à travers ledit plancher 8 à la traverse 4.

L'ensemble 1 comprend en outre au moins un élément de renfort 9 conçu pour s'étendre le long d'un longeron 3, entre une extrémité 7 de la traverse 4 fixée audit longeron 3 et le panneau 6 arrière. L'élément de renfort 9 est conçu pour rigidifier la partie du longeron 3 entre ladite extrémité 7 de la traverse 4 et le panneau 6 arrière. L'élément de renfort 9 permet de limiter les déformations du longeron 3 en cas de choc arrière subi par la structure 2 de coffre équipée de l'ensemble 1.

Dans un mode de réalisation privilégié, l'ensemble 1 comprend deux éléments de renfort 9, chacun fixé à chacune des extrémité 7 de la traverse 4.

Comme illustré sur la figure, au moins un élément de renfort 9 forme une équerre 10 destinée à renforcer l'angle 11 formé entre le panneau 6 arrière et le longeron 3 le long duquel l'élément de renfort 9 s'étend.

Dans le mode de réalisation illustré sur la figure, la partie de l'élément de renfort 9 formant une équerre 10 est fixée à une platine 12 sur laquelle est également fixée l'extrémité 7 de la traverse 4. Ainsi, la platine 12 présente une première portion 13 qui s'étend de l'extrémité 7 jusqu'au panneau 6 le long d'une première face 14 du longeron 3. La platine 10 présente également une deuxième portion 15 qui s'étend le long d'une deuxième face 16 du longeron 3. Lorsque le longeron 3 présente une section transversale sensiblement rectangulaire, les première 13 et deuxième 14 portions s'étendent suivant deux plans perpendiculaires entre eux. De façon alternative, la partie de l'élément de renfort 9 formant une équerre 10 est positionnée directement sur le longeron 3 entre la traverse 4 et le panneau 6 arrière. Dans ce cas, les dimensions de l'équerre 10 sont avantageusement choisies de sorte que l'équerre 10 soit en contact avec la traverse 4 et le panneau 6 arrière.

La platine 12 de l'élément de renfort 9 est, par exemple, réalisé par emboutissage d'une tôle. La partie de l'élément de renfort 9 formant une équerre 10 est, par exemple, soudée sur la platine 12.

Ainsi, l'ensemble 1 de protection selon l'invention permet de former une structure 2 de coffre selon l'invention. La structure 2 de coffre permet de réduire la zone d'exclusion située dans le coffre, à proximité du panneau 6 arrière. En effet, la traverse 4 et l'élément de renfort 9 permettent de rigidifier les longerons 3, de sorte qu'en cas de choc arrière subi par la structure 2 de coffre, la pénétration du panneau 6 arrière en direction de la traverse 4 est limitée. Un bloc de batteries fixé à la traverse 4 est ainsi protégé de l'impact du panneau 6 arrière sur celui-ci en cas de choc arrière.

L'invention ne se limite pas au mode de réalisation de l'ensemble de protection décrit ci-avant, seulement à titre d'exemple, mais d'autres modes de réalisation peuvent être conçus par l'homme de métier sans sortir du cadre et de la portée de la présente invention, n'étant définie que par l'étendue de la protection des revendications annexées.

## Revendications

1. Structure (2) de coffre comprenant deux longerons (3) et un panneau (6) arrière fixé aux extrémités des longerons (5), la structure (2) étant équipé d'un ensemble (1) de protection d'un bloc de batteries, comprenant une traverse (4) de fixation s'étendant entre deux extrémités (7), chacune des extrémités (7) étant fixée à un des longerons (3) du véhicule, à distance du panneau (6) arrière de la structure (2), la traverse (4) étant conformée pour permettre la fixation d'au moins un bloc de batteries à la traverse (4), de sorte que la traverse (4) soit disposée entre le bloc de batteries et le panneau (6) arrière, **caractérisé en ce que** l'ensemble (1) comprenant en outre au moins un élément de renfort (9) conçu pour s'étendre le long d'un longeron (3), entre une extrémité (7) de la traverse (4) fixée audit longeron (3) et le panneau (6) arrière, l'élément de renfort (9) étant conçu pour rigidifier la partie du longeron (3) entre ladite extrémité (7) de la traverse (4) et le panneau (6) arrière, de sorte à limiter les déformations du longeron (3) en cas de choc arrière subi par la structure (2) de coffre équipée de l'ensemble (1).

2. Structure (2) selon la revendication 1, **caractérisé en ce qu'**il comprend deux éléments de renforts (9) destinés à être fixés à chacune des extrémités (7) de la traverse (4).

3. Structure (2) selon la revendication 1 ou 2, **caractérisé en ce que** au moins un élément de renfort (9) forme une équerre (10) destinée à renforcer l'angle (11) formé entre le panneau (6) arrière et le longeron (3) le long duquel l'élément de renfort (9) s'étend.

4. Structure (2) selon l'une des revendications 1 à 3, **caractérisé en ce que** au moins un élément de renfort (9) est conformé pour s'étendre sur au moins deux faces (14, 16) du longeron (3).

5. Structure (2) de coffre selon l'une des revendications précédentes, **caractérisée en ce qu'**un bloc de batteries est fixé à la traverse (4) de fixation, la traverse (4) étant disposée entre le bloc de batteries et le panneau (6) arrière.

6. Véhicule automobile présentant une structure (2) de coffre selon l'une des revendications précédentes.

## Patentansprüche

1. Kofferraumstruktur (2) mit zwei Längsträgern (3) und einer an den Enden der Längsträger (5) befestigten rückwärtigen Platte (6), wobei die Struktur (2) mit einer Schutzanordnung (1) für einen Batterieblock ausgestattet ist, die eine sich zwischen zwei Enden (7) erstreckende Befestigungsschiene (4) umfasst, wobei jedes Ende (7) an einem der Längsträger (3) des Fahrzeugs im Abstand von der rückwärtigen Platte (6) der Struktur (2) befestigt ist, wobei die Schiene (4) so gestaltet ist, dass sie die Befestigung mindestens eines Batteriebblocks an der Schiene (4) ermöglicht Batterieeinheit und Rückwand (6), **dadurch gekennzeichnet, dass** die Anordnung (1) ferner mindestens ein Verstärkungselement (9) aufweist, das so ausgebildet ist, dass es sich entlang eines Längsträgers (3) zwischen einem Ende (7) des an dem Längsträger (3) befestigten Längsträgers (4) und der Rückwand (6) erstreckt, wobei das Verstärkungselement (9) so ausgebildet ist, dass es den Teil des Längsträgers (3) zwischen dem Ende (7) des Längsträgers (4) und der Rückwand (6) versteift, um die Verformungen des Längsträgers (3) im Falle eines Rückschlags der Struktur zu begrenzen (2) Kofferraumausrüstung (1).

2. Struktur (2) nach Anspruch 1, **dadurch gekennzeichnet, dass** sie zwei Verstärkungselemente (9) umfasst, die an jedem der Enden (7) des Querträgers (4) befestigt werden sollen.

3. Struktur (2) nach Anspruch 1 oder 2, **dadurch gekennzeichnet, dass** mindestens ein Verstärkungselement (9) einen Winkel (10) bildet, der dazu bestimmt ist, den Winkel (11) zu verstärken, der zwischen der hinteren Platte (6) und dem Längsträger (3) gebildet ist, entlang dem sich das Verstärkungselement (9) erstreckt.

4. Struktur (2) nach einem der Ansprüche 1 bis 3, **dadurch gekennzeichnet, dass** mindestens ein Verstärkungselement (9) ausgebildet ist, um sich über mindestens zwei Flächen (14, 16) des Längsträgers (3) zu erstrecken.

5. Kofferraumstruktur (2) nach einem der vorhergehenden Ansprüche, **dadurch gekennzeichnet, dass** ein Batterieblock an dem Befestigungsträger (4) befestigt ist, wobei der Träger (4) zwischen dem Batterieblock und der Rückwand (6) angeordnet ist.

6. Kraftfahrzeug mit einer Kofferraumstruktur (2) nach einem der vorhergehenden Ansprüche.

## Claims

1. Trunk structure (2) comprising two side members (3) and a rear sign (6) fixed to the ends of the side members (5), the frame (2) being equipped with an assembly (1) for protecting a battery pack, comprising a fixing cross member (4) extending between two ends (7), each of the ends (7) being fixed to one of the side members (3) of the vehicle, at a distance from the rear sign (6) of the frame (2), the cross member (4) being shaped to allow at least one battery pack to be fixed to the cross member (4), so that the cross member (4) is arranged between the battery pack and the rear sign (6), wherein the assembly (1) further comprises at least one reinforcing item (9) designed to extend along a spar (3), between an end (7) of the cross-member (4) fixed to said spar (3) and the item sign (6), the reinforcing sign (9) being designed to stiffen the part of the spar (3) between said end (7) of the cross-member (4) and the rear rear (6), so as to limit the deformations of the spar (3) in the event of an impact rear sustained by the trunk structure (2) equipped with the assembly (1).

2. Structure (2) according to Claim 1, **characterised in that** it comprises two reinforcing items (9) intended to be fixed to each of the ends (7) of the cross-member (4).

3. Structure (2) according to Claim 1 or 2, **characterised in that** at least one reinforcing item (9) forms a bracket (10) intended to reinforce the angle (11) formed between the rear sign (6) and the spar (3) along which the reinforcing item (9) extends.

4. Structure (2) according to one of claims 1 to 3, wherein at least one reinforcing item (9) is shaped to extend over at least two faces (14, 16) of the spar (3).

5. Trunk structure (2) according to one of the previous claims, wherein a battery pack is fixed to the fixing cross-member (4), the cross-member (4) being arranged between the battery pack and the rear sign (6).

6. Motor vehicle having a trunk structure (2) according to one of the previous claims.
